(19) Europäisches Patentamt
European Patent Office
Office européen des brevets

(11) EP 3 115 415 B1

(12) **EUROPEAN PATENT SPECIFICATION**

(45) Date of publication and mention of the grant of the patent:
**04.05.2022 Bulletin 2022/18**

(21) Application number: **15758510.0**

(22) Date of filing: **06.03.2015**

(51) International Patent Classification (IPC):
***C08L 51/04*** *(2006.01)* ***C08L 33/10*** *(2006.01)*
***C08F 265/06*** *(2006.01)* ***B32B 27/30*** *(2006.01)*

(52) Cooperative Patent Classification (CPC):
**B32B 27/308; B32B 27/08; B32B 27/20; C08F 265/06; C08L 51/04;** B32B 2307/412; B32B 2307/71; B32B 2451/00

(86) International application number:
**PCT/JP2015/001240**

(87) International publication number:
**WO 2015/133153 (11.09.2015 Gazette 2015/36)**

(54) **METHACRYLIC RESIN COMPOSITION**

METHACRYLHARZZUSAMMENSETZUNG

COMPOSITION DE RÉSINE MÉTHACRYLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2014 JP 2014045759**

(43) Date of publication of application:
**11.01.2017 Bulletin 2017/02**

(73) Proprietor: **Kaneka Corporation**
**Osaka-shi, Osaka 530-8288 (JP)**

(72) Inventors:
- **FUJIWARA, Yutaka**
  **Osaka 566-0072 (JP)**
- **HATANO, Keisuke**
  **Osaka 566-0072 (JP)**
- **KITAYAMA, Fuminobu**
  **Osaka 566-0072 (JP)**

(74) Representative: **Vossius & Partner**
**Patentanwälte Rechtsanwälte mbB**
**Siebertstrasse 3**
**81675 München (DE)**

(56) References cited:
**EP-A1- 1 555 293**
**JP-A- 2003 073 520**
**JP-A- 2003 128 734**
**JP-A- 2003 327 633**
**JP-A- 2006 008 900**
**JP-A- 2007 091 981**
**US-A1- 2009 012 215**

- **DATABASE WPI Week 200975 Thomson Scientific, London, GB; AN 2009-Q76206 XP002772563, & JP 2009 256509 A (KANEKA CORP) 5 November 2009 (2009-11-05)**
- **DATABASE WPI Week 200923 Thomson Scientific, London, GB; AN 2009-G09254 XP002772564, & JP 2009 056770 A (KANEKA CORP) 19 March 2009 (2009-03-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 115 415 B1

## Description

### Technical Field

The present invention relates to a methacrylic resin composition according to any one of claims 1 to 3 and a film made thereof according to claim 4 and a laminated article according to claim 5.

### Background Art

Acrylic resins are excellent in terms of transparency and weatherability, and readily formable into various designs. However, acrylic resins break easily, i.e., having a problem of brittleness. An acrylic resin containing an acrylic acid ester-based cross-linked elastic body overcomes the problem of brittleness owing to the elasticity imparted thereto, and is used in such a manner that the acrylic resin is laminated on various materials, such as plastics, wooden materials, and metals.

Particularly in a case where such an acrylic resin is used for a building material, the acrylic resin is required to prevent degradation of the base material due to ultraviolet rays. In view of this, there has been proposed a film made of an acrylic resin containing an acrylic acid ester-based cross-linked elastic body copolymerized with a reactive ultraviolet absorber, the film having excellent weatherability, impact resistance, and transparency (see Patent Literatures 1 and 2, for example).

Patent Literature 3 discloses a methacrylic resin having ultraviolet ray shielding performance. Patent Literature 4 discloses an acrylic film and an acrylic film laminate produced by injection molding.

### **Citation** List

### Patent Literature

PTL 1: WO2005/095478
PTL2: Japanese Laid-Open Patent Application Publication No. H09-194542
PTL 3: US 2009/012215 A1
PTL 4: EP 1 555 293 A1

### Summary of Invention

### Technical Problem

Meanwhile, there is a demand for a film that is free from the following problems: a problem of film delamination when the film is used for a building material; and a problem of film whitening when the film comes into direct contact with water or hot water during its outdoor use (i.e., hot water whitening).

In view of the above, an object of the present invention is to provide a methacrylic resin composition that realizes both delamination resistance and hot water whitening resistance and that makes it possible to form a film excellent in terms of transparency, flex cracking (whitening) resistance, and appearance.

### Solution to Problem

As a result of diligent studies, the inventors of the present invention have found that a film that realizes both delamination resistance and hot water whitening resistance and that is excellent in terms of transparency, flex cracking (whitening) resistance, and appearance can be obtained by setting a cross-linking agent content (wt%) in a monomer mixture used in an acrylic acid ester-based rubbery polymer (A-a), the reduced viscosity of an acrylic graft copolymer (A), and the reduced viscosity of a methacrylic resin composition to be in specific ranges. Based on the findings, the inventors have arrived at the present invention.

Specifically, the present invention relates to a methacrylic resin composition including an acrylic graft copolymer (A) containing an acrylic acid ester-based rubbery polymer (A-a). The acrylic graft copolymer (A) is obtained by polymerizing a monomer mixture (A-b), which contains a methacrylic acid ester as a major component, with the acrylic acid ester-based rubbery polymer (A-a). The acrylic acid ester-based rubbery polymer (A-a) is obtained by polymerizing a monomer mixture containing 60 to 100 wt% of an acrylic acid ester and 0 to 40 wt% of another copolymerizable vinyl-based monomer with a copolymerizable cross-linking agent. In the methacrylic resin composition: (1) a content of the

acrylic acid ester-based rubbery polymer (A-a) is 10 to 40 wt% with respect to 100 wt% of the methacrylic resin composition; (2) a mean particle diameter d of the acrylic acid ester-based rubbery polymer (A-a) is 50 to 200 nm; (3) a relationship between the mean particle diameter d (nm) of the acrylic acid ester-based rubbery polymer (A-a) and the cross-linking agent content w (wt%) in a monomer mixture used in the acrylic acid ester-based rubbery polymer (A-a) satisfies an inequation of $0.02d \leq w \leq 0.05d$; (4) a graft ratio of the acrylic graft copolymer (A) is 60 to 105 %; and (5) a reduced viscosity of components of the methacrylic resin composition, the components being soluble in methyl ethyl ketone, is 0.8 to 1.3 dl/g.

The methacrylic resin composition according to the present invention may include a methacrylic polymer (B).

The methacrylic resin composition according to the present invention may include an ultraviolet absorber.

A film according to the present invention may be formed by molding the methacrylic resin composition of the present invention.

A laminated article according to the present invention may include the film of the present invention.

## Advantageous Effects of Invention

The methacrylic resin composition according to the present invention realizes both delamination resistance and hot water whitening resistance and makes it possible to obtain a film excellent in terms of thermal shrinkage resistance, transparency, flex cracking (whitening) resistance, and appearance.

## Description of Embodiments

Hereinafter, one preferred embodiment of the present invention is described in detail.

A methacrylic resin composition according to the present invention contains an acrylic graft copolymer (A) containing an acrylic acid ester-based rubbery polymer (A-a).

The acrylic graft copolymer (A) used in the present invention is obtained by polymerizing a monomer mixture (A-b) containing a methacrylic acid ester as a major component with the acrylic acid ester-based rubbery polymer (A-a). At the time, there is a possibility that graft reaction of the monomer mixture (A-b), which contains a methacrylic acid ester as a major component, with the acrylic acid ester-based rubbery polymer (A-a) does not occur, and as a result, an ungrafted polymer (i.e., free polymer) is formed. The acrylic graft copolymer may contain the free polymer.

The acrylic acid ester-based rubbery polymer (A-a) used in the present invention is obtained by polymerizing a monomer mixture containing 60 to 100 wt% of an acrylic acid ester and 0 to 40 wt% of another copolymerizable vinyl-based monomer (100 wt% in total) with a specific amount of copolymerizable cross-linking agent. The entire monomer mixture and the entire cross-linking agent may be mixed together at one time, and the resulting mixture may be used. Alternatively, the monomer mixture and the cross-linking agent may be used in two or more stages in such a manner that their compositions are varied in each stage (that is, multi-stage polymerization may be performed). The acrylic acid ester-based rubbery polymer (A-a) may contain a methacrylic acid ester-based polymer.

As the acrylic acid ester in the acrylic acid ester-based rubbery polymer (A-a), an acrylic acid ester having an alkyl group with 1 to 12 carbon atoms can be used from the viewpoints of polymerizability and costs. Specific examples of the acrylic acid ester include methyl acrylate, ethyl acrylate, propyl acrylate, butyl acrylate, 2-ethylhexyl acrylate, and n-octyl acrylate. One of these monomers may be used alone, or two or more of these monomers may be used in combination.

The acrylic acid ester content in the acrylic acid ester-based rubbery polymer (A-a) is 60 to 100 wt%, preferably 70 to 100 wt%, and more preferably 80 to 100 wt%, with respect to 100 wt% of the monomer mixture. If the acrylic acid ester content is less than 60 wt%, there are tendencies that the impact resistance and tensile elongation at break are reduced and a crack easily occurs when the film is cut.

As the other copolymerizable vinyl-based monomer in the acrylic acid ester-based rubbery polymer (A-a), a methacrylic acid ester can be used. Preferably, the methacrylic acid ester has an alkyl group with 1 to 12 carbon atoms. The alkyl group may be either a straight-chain or branched-chain alkyl group. Examples of the methacrylic acid ester include methyl methacrylate, ethyl methacrylate, propyl methacrylate, n-butyl methacrylate, isobutyl methacrylate, and t-butyl methacrylate. Examples of the other copolymerizable vinyl-based monomer also include: vinyl halides such as vinyl chloride and vinyl bromide; vinyl cyanides such as acrylonitrile and methacrylonitrile; vinyl esters such as vinyl formate, vinyl acetate, and vinyl propionate; aromatic vinyl derivatives such as styrene, vinyltoluene, and $\alpha$-methylstyrene; vinylidene halides such as vinylidene chloride and vinylidene fluoride; acrylic acid and its salts, such as acrylic acid, sodium acrylate, and calcium acrylate; acrylic acid alkyl ester derivatives such as $\beta$-hydroxyethyl acrylate, dimethylaminoethyl acrylate, glycidyl acrylate, acrylamide, and N-methylol acrylamide; methacrylic acid and its salts, such as methacrylic acid, sodium methacrylate, and calcium methacrylate; and methacrylic acid alkyl ester derivatives such as methacrylamide, $\beta$-hydroxyethyl methacrylate, dimethylaminoethyl methacrylate, and glycidyl methacrylate. One of these monomers may be used alone, or two or more of these monomers may be used in combination. Among these monomers,

a methacrylic acid ester is particularly preferable from the viewpoints of weatherability and transparency.

The other copolymerizable vinyl-based monomer content in the acrylic acid ester-based rubbery polymer (A-a) is 0 to 40 wt%, preferably 0 to 30 wt%, and more preferably 0 to 20 wt%, with respect to 100 wt% of the aforementioned monomer mixture. If the other copolymerizable vinyl-based monomer content exceeds 40 wt%, there is a case where the elastic property of the acrylic acid ester-based rubbery polymer is reduced, which causes reduction in impact resistance and tensile elongation at break, and consequently, a crack easily occurs when the film is cut.

The copolymerizable cross-linking agent content in the acrylic acid ester-based rubbery polymer (A-a) and the mean particle diameter of the acrylic acid ester-based rubbery polymer have a great influence on the hot water whitening resistance, stress whitening resistance, tensile elongation at break, or transparency. That is, it is important that the mean particle diameter d (nm) of the acrylic acid ester-based rubbery polymer and the cross-linking agent content w (wt%) in the entire acrylic acid ester-based rubbery polymer (A) in the polymerization satisfy an inequation shown below.

$$0.02d \leq w \leq 0.05d$$

The mean particle diameter of the acrylic acid ester-based rubbery polymer (A-a) is in the range of 50 to 200 nm, and is preferably 50 to 160 nm, more preferably 50 to 120 nm, most preferably 60 to 120 nm. If the mean particle diameter of the acrylic acid ester-based rubbery polymer is less than 50 nm, there are tendencies that the impact resistance, tensile elongation at break, and so forth are reduced and a crack easily occurs when the film is cut. On the other hand, if the mean particle diameter of the acrylic acid ester-based rubbery polymer exceeds 200 nm, there are tendencies that stress whitening easily occurs and the transparency is reduced, and in addition, the transparency after vacuum forming is reduced.

The cross-linking agent content is in the range specified by the above inequation $0.02d \leq w \leq 0.05d$, preferably satisfies $0.023d \leq w \leq 0.047d$, and more preferably satisfies $0.025d \leq w \leq 0.045d$. If the cross-linking agent content w is less than 0.02d or more than 0.05d, there are the following tendencies: hot water whitening and stress whitening occur; the impact resistance, transparency, and tensile elongation at break are reduced; a crack easily occurs when the film is cut; and the film formability degrades.

The cross-linking agent may be a commonly used cross-linking agent, for example, a polyfunctional monomer having at least two non-conjugated double bonds per molecule. Examples of the cross-linking agent include allyl methacrylate, allyl acrylate, triallyl cyanurate, triallyl isocyanurate, diallylphthalate, diallyl maleate, divinyl adipate, divinylbenzene, ethylene glycol dimethacrylate, diethylene glycol methacrylate, triethylene glycol dimethacrylate, trimethylolpropane trimethacrylate, tetramethylolmethane tetramethacrylate, dipropylene glycol dimethacrylate, and acrylates of these. One of these cross-linking agents may be used alone, or two or more of these cross-linking agents may be used in combination.

The acrylic graft copolymer (A) used in the present invention is, as described above, obtained by polymerizing the monomer mixture (A-b), which contains a methacrylic acid ester as a major component, with the acrylic acid ester-based rubbery polymer (A-a). Preferably, the acrylic graft copolymer (A) is obtained by performing the polymerization in at least one stage, in which 95 to 25 parts by weight of the monomer mixture (A-b) containing a methacrylic acid ester as a major component are polymerized with 5 to 75 parts by weight of the acrylic acid ester-based rubbery polymer (A-a).

In the monomer mixture (A-b) containing a methacrylic acid ester as a major component, the methacrylic acid ester content is preferably 80 wt% or more, more preferably 85 wt%, and even more preferably 90 wt%. If the methacrylic acid ester content is less than 80 wt%, the hardness and rigidity of the obtained film tend to be reduced. The aforementioned methacrylic acid ester in the acrylic acid ester-based rubbery polymer (A-a) can also be used as the methacrylic acid ester in the monomer mixture (A-b). In the monomer mixture (A-b), the acrylic acid ester or the other copolymerizable vinyl-based monomer that are mentioned above in relation to the monomer mixture of the acrylic acid ester-based rubbery polymer (A-a) can be used in addition to the methacrylic acid ester. However, the use of a methacrylic acid ester is preferable from the viewpoints of transparency, hardness, and thermal resistance.

A graft ratio of the acrylic graft copolymer (A) is an index indicating the weight ratio of the monomer mixture (A-b) graft-bonded to the acrylic acid ester-based rubbery polymer (A-a) in a case where the weight of the acrylic acid ester-based rubbery polymer (A-a) is 100. In the present invention, the graft ratio of the acrylic graft copolymer (A) is in the range of 60 to 105 %, more preferably, 65 to 100 %, and most preferably 70 to 95 %. If the graft ratio is less than 60 %, there are tendencies that flex whitening resistance, transparency, and tensile elongation at break are reduced, and a crack easily occurs when the film is cut. On the other hand, if the graft ratio exceeds 105 %, delamination resistance tends to be reduced.

In the acrylic graft copolymer (A) according to the present invention, a reactive ultraviolet absorber may be copolymerized in the acrylic acid ester-based rubbery polymer (A-a) and/or in the polymer of the monomer mixture (A-b) in order to improve the weatherability and molding processability. Specifically, the reactive ultraviolet absorber may be copolymerized with the monomer mixture and cross-linking agent of the acrylic acid ester-based rubbery polymer

(A-a) and/or copolymerized with the monomer mixture (A-b). Particularly preferably, the ultraviolet absorber is copolymerized with both the acrylic acid ester-based rubbery polymer (A-a) and the monomer mixture (A-b) containing a methacrylic acid ester as a major component.

The reactive ultraviolet absorber used herein may be a known reactive ultraviolet absorber and is not particularly limited. Preferably, the reactive ultraviolet absorber is one represented by a general formula (1) shown below from the viewpoints of molding processability and weatherability.

[Chem. 1]

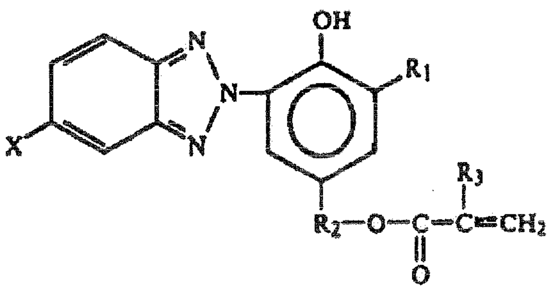

(1)

In the formula (1), X is H or halogen; $R_1$ is H, a methyl, or a t-alkyl group with 4 to 6 carbon atoms; $R_2$ is a straight-chain or branched-chain alkylene group with 2 to 10 carbon atoms; and $R_3$ is H or a methyl.

Specific examples of the reactive ultraviolet absorber represented by the general formula (1) include 2-(2'-hydroxy-5'-methacryloyloxyethylphenyl)-2H-benzotriazoles, such as 2-(2'-hydroxy-5'-acryloyloxyethylphenyl)-2H-benzotriazol, 2-(2'-hydroxy-5'-methacryloyloxyethylphenyl)-2H-benzotriazole, 2-(2'-hydroxy-5'-methacryloyloxyethylphenyl)-5-chloro-2H-benzotriazole, 2-(2'-hydroxy-5'-methacryloyloxypropylphenyl)-2H-benzotriazole, and 2-(2'-hydroxy-5'-methacryloyloxyethyl)-3'-t-butylphenyl)-2H-benzotriazole. Preferably, the reactive ultraviolet absorber is 2-(2'-hydroxy-5'-methacryloyloxyethylphenyl)-2H-benzotriazole in terms of cost and handleability.

The copolymerization ratio of the reactive ultraviolet absorber is preferably 0.01 to 30 parts by weight, more preferably 0.01 to 25 parts by weight, even more preferably 0.01 to 20 parts by weight, and particularly preferably 0.05 to 20 parts by weight, with respect to 100 parts by weight of the acrylic graft copolymer (A). If the copolymerization ratio of the reactive ultraviolet absorber is less than 0.01 parts by weight, the weatherability of the film formable from the obtained methacrylic resin composition tends to be reduced. If the copolymerization ratio of the reactive ultraviolet absorber exceeds 30 parts by weight, the impact resistance and flex cracking resistance of the film tend to be reduced.

The method of producing the acrylic graft copolymer (A) according to the present invention is not particularly limited, and a known emulsion polymerization method, emulsion-suspension polymerization method, suspension polymerization method, bulk polymerization method, or solution polymerization method is applicable. Among these, an emulsion polymerization method is particularly preferable.

The method of the copolymerization of the reactive ultraviolet absorber in the acrylic graft copolymer (A) is not particularly limited. Preferably, the copolymerization is performed during the production of the acrylic graft copolymer (A). That is, the reactive ultraviolet absorber may be copolymerized with the monomer mixture and cross-linking agent of the acrylic acid ester-based rubbery polymer (A-a) and/or the monomer mixture (A-b). The method of the copolymerization may be a known emulsion polymerization method, emulsion-suspension polymerization method, suspension polymerization method, bulk polymerization method, or solution polymerization method. Among these, an emulsion polymerization method is particularly preferable.

In the present invention, as an initiator for the polymerization of the acrylic acid ester-based rubbery polymer (A-a), a known initiator such as an organic peroxide, inorganic peroxide, or azo compound can be used. Specific examples of the initiator include: organic peroxides such as t-butyl hydroperoxide, 1,1,3,3-tetramethylbutyl hydroperoxide, succinic acid peroxide, peroxymaleic acid t-butyl ester, cumene hydroperoxide, and benzoyl peroxide; inorganic peroxides such as potassium persulfate and sodium persulfate; and oil-soluble initiators such as azobisisobutyronitrile. One of these initiators may be used alone, or two or more of these initiators may be used in combination. Each of these initiators may be used as a common redox type initiator by combining each initiator with such a reductant as sodium sulfite, sodium thiosulfate, sodium formaldehyde sulfoxylate, ascorbic acid, hydroxyacetonic acid, ferrous sulfate, or a complex of ferrous sulfate and disodium ethylenediaminetetraacetic acid.

The organic peroxide can be added by a known method of addition, such as a method of directly adding the organic peroxide to the polymerization system, a method of addition by mixing the organic peroxide with a monomer, or a method of addition by dispersing the organic peroxide in an aqueous emulsifying agent solution. In light of the transparency, a method of addition by mixing the organic peroxide with a monomer, or a method of addition by dispersing

the organic peroxide in an aqueous emulsifying agent solution, is preferable.

In light of polymerization stability and particle size control, it is preferable to use the organic peroxide as a redox type initiator by combining the organic peroxide with an inorganic reductant such as a divalent iron salt and/or with an organic reductant such as sodium formaldehyde sulfoxylate, reducing sugar, or ascorbic acid.

A surfactant used in the emulsion polymerization is not particularly limited, and any general surfactant for emulsion polymerization can be used. Specific examples of the surfactant include: anionic surfactants such as sodium alkylsulfonate, sodium alkylbenzenc sulfonate, sodium dioctyl sulfosuccinate, sodium lauryl sulfate, and fatty acid sodium; and nonionic surfactants such as reaction products resulting from the reaction of alkylphenols or aliphatic alcohols with propylene oxide and/or ethylene oxide. Each of these surfactants may be used alone, or two or more of these surfactants may be used in combination. If necessary, a cationic surfactant, such as an alkylamine salt, may be used.

The mean particle diameter of the acrylic graft copolymer (A) obtained in the present invention is greater than the aforementioned mean particle diameter d of the acrylic acid ester-based rubbery polymer (A-a), and is preferably greater than 100 nm but not greater than 400 nm, more preferably greater than 100 nm but not greater than 350 nm, even more preferably greater than 100 nm but not greater than 300 nm. If the mean particle diameter of the acrylic graft copolymer (A) is 100 nm or less, the impact resistance and flex cracking resistance of the film formable from the obtained methacrylic resin composition tend to be reduced. If the mean particle diameter exceeds 400 nm, the transparency of the film tends to be reduced.

The obtained acrylic graft copolymer (A) latex is subjected to usual operations such as coagulation, washing, and drying, or to treatments such as spray drying or lyophilization. As a result, the resin composition is separated and collected.

The methacrylic resin composition according to the present invention may contain a methacrylic polymer (B). The methacrylic polymer (B) used in the present invention preferably contains 80 wt% or more of a methacrylic acid ester, more preferably contains 85 wt% or more thereof, and even more preferably contains 90 wt% or more thereof. If the methacrylic acid ester is less than 80 wt%, the hardness and rigidity of the obtained film tend to be reduced.

In the present invention, a monomer or monomers in the methacrylic polymer (B) other than methyl methacrylate may be those mentioned above as usable in the acrylic graft copolymer (A). One of the above-mentioned monomers may be used alone, or two or more of the monomers may be used in combination. That is, the methacrylic polymer (B) contains a methacrylic acid ester and an acrylic acid ester preferably in the weight ratio range of 80/20 to 100/0, more preferably 90/10 to 100/0, and even more preferably 95/5 to 100/0. The methacrylic polymer (B) preferably contains 93 wt% or more of the methacrylic acid ester, in which case, the transparency, hardness, thermal resistance, and chemical resistance are favorable.

In the present invention, it is also possible to polymerize the methacrylic polymer (B) separately from the acrylic graft copolymer (A). Also in this case, the polymerization method is not particularly limited, and a known emulsion polymerization method, emulsion-suspension polymerization method, suspension polymerization method, bulk polymerization method, or solution polymerization method is applicable. Examples of the methacrylic polymer (B) include polyglutarimide, glutaric anhydride polymer, lactone-cyclized methacrylic resin, polyethylene terephthalate resin, and polybutylene terephthalate resin.

As an initiator for the polymerization of the methacrylic polymer (B), a known initiator such as an organic peroxide, inorganic peroxide, or azo compound can be used. Specific examples of the initiator include: organic peroxides such as t-butyl hydroperoxide, 1,1,3,3-tetramethylbutyl hydroperoxide, succinic acid peroxide, peroxymaleic acid t-butyl ester, cumene hydroperoxide, benzoyl peroxide, lauroyl peroxide, t-butyl peroxybenzoate, isopropyl-t-butyl peroxycarbonate, butyl perbenzoate, 1,1 -bis(alkylperoxy)3,3,5-trimethylcyclohexane, and 1,1-bis(alkylperoxy)cyclohexane; inorganic peroxides such as potassium persulfate and sodium persulfate; and azo compounds such as azobisisobutyronitrile. One of these initiators may be used alone, or two or more of these initiators may be used in combination.

The organic peroxide can be added by a known method of addition, such as a method of directly adding the organic peroxide to the polymerization system, a method of addition by mixing the organic peroxide with a monomer, or a method of addition by dispersing the organic peroxide in an aqueous emulsifying agent solution. In light of the transparency, a method of addition by mixing the organic peroxide with a monomer is preferable.

A dispersant used in the aforementioned suspension polymerization may be a dispersant that is commonly used in suspension polymerization. Examples of such a dispersant include: polymeric dispersants such as polyvinyl alcohol, polyvinyl pyrrolidone, and polyacrylamide; and poorly water-soluble inorganic salts such as calcium phosphate, hydroxyapatite, and magnesium pyrophosphate. In the case of using a poorly water-soluble inorganic salt, it is effective to use an anionic surfactant, such as sodium $\alpha$-olefin sulfonate or sodium dodecylbenzenesulfonate, together with the poorly water-soluble inorganic salt since the dispersion stability is enhanced thereby. Such a dispersant as mentioned above may be added once or more during the polymerization in order to adjust the diameter of the obtained resin particles.

In the present invention, the methacrylic resin composition can be obtained by producing the acrylic graft copolymer (A) and the methacrylic polymer (B) separately from each other by polymerization and then mixing them together. Alternatively, the methacrylic resin composition can be produced in the following method: producing the acrylic

graft copolymer (A) in a reactor and then producing the methacrylic polymer (B) in the same reactor immediately after the production of the acrylic graft copolymer (A). In the former mixing method, each of the acrylic graft copolymer (A) and the methacrylic polymer (B) may be independently in the form of, for example, latex, powder, beads, or pellets.

The acrylic acid ester-based rubbery polymer (A-a) content in the methacrylic resin composition used in the present invention is preferably 10 to 40 wt%, and more preferably 10 to 30 wt%, with respect to 100 wt% of the methacrylic resin composition. If the acrylic acid ester-based rubbery polymer (A-a) content is less than 10 wt%, there are the following tendencies: the tensile elongation at break of the obtained film is reduced; a crack occurs easily when the film is cut; and stress whitening occurs easily. On the other hand, if the acrylic acid ester-based rubbery polymer (A-a) content exceeds 40 wt%, the hardness and rigidity of the obtained film tend to be reduced.

The reduced viscosity of components of the methacrylic resin composition used in the present invention, the components being soluble in methyl ethyl ketone, is 0.8 to 1.3 dl/g, preferably 0.8 to 1.1 dl/g, and more preferably 0.8 to 1.0 dl/g. If the reduced viscosity of the components, soluble in methyl ethyl ketone, of the methacrylic resin composition is less than 0.75 dl/g, the delamination resistance tends to be reduced. On the other hand, if the reduced viscosity of the components, soluble in methyl ethyl ketone, of the methacrylic resin composition exceeds 1.3 dl/g, the formability of the film tends to be reduced.

The methacrylic resin composition obtained according to the present invention can be processed into various molded articles by various plastic processing methods, such as injection molding, extrusion molding, blow molding, and compression molding.

The methacrylic resin composition according to the present invention is particularly useful as a film. The composition is satisfactory processed by blown film extrusion or T-die extrusion, which is an ordinary melt extrusion method, or a calendering method, or a solvent casting method, for example. If necessary, at the time of forming the film, both surfaces of the film are concurrently brought into contact with a roll or metal belt, in particular, a roll or metal belt heated to a temperature higher than or equal to the glass transition temperature, and thereby a film with higher surface quality can be obtained. In accordance with the intended use of the film, lamination forming of the film or alteration of the property of the film by biaxial stretching can be performed.

If necessary, the methacrylic resin composition according to the present invention may be blended with another thermoplastic resin, for example, polyethylene terephthalate resin or polybutylene terephthalate resin. The method of the blending is not particularly limited, but may be a known method.

If necessary, the following may be added to the methacrylic resin composition of the present invention alone or in combination of two or more thereof: an inorganic pigment or organic dye for coloring; an antioxidant, heat stabilizer, ultraviolet absorber, ultraviolet stabilizer, or the like for improving stability against heat or light; or others including an antibacterial, a deodorant, a lubricant, etc.

In particular, an ultraviolet absorber is preferably used in order to improve the weatherability. Examples of the ultraviolet absorber include commonly-used benzotriazole-based ultraviolet absorbers, 2-hydroxybcnzophenone-based ultraviolet absorbers, and salicylic acid phenyl ester-based ultraviolet absorbers. Specific examples of the benzotriazole-based ultraviolet absorber include 2,2'-methylenebis[4-(1,1,3,3-tetramethylbutyl)-6-(2H-benzotriazol-2-yl)-phenol], 2-(5-methyl-2-hydroxyphenyl)-2H-benzotriazole, 2-[2-hydroxy-3,5-bis($\alpha$,$\alpha$-dimethylbenzyl)phenyl]-2H-benzotriazole, 2-(3,5-di-tert-butyl-2-hydroxyphenyl)-2H-benzotriazole, 2-(3-tert-butyl-5-methyl-2-hydroxyphenyl)-5-chloro-2H-benzotriazole. 2-(3,5-di-tert-butyl-2-hydroxyphenyl)-5-chloro-2H-benzotriazole, 2-(3,5-di-tert-amyl-2-hydroxyphenyl)-2H-benzotriazole, and 2-(2'-hydroxy-5'-tert-octylphenyl)-2H-benzotriazole. Specific examples of the 2-hydroxybenzophenone-based ultraviolet absorber include 2-hydroxy-4-methoxybenzophenone, 2-hydroxy-4-octyloxybenzophenone, 2,4-dihydroxybenzophenone, 2-hydroxy-4-methoxy-4'-chlorobenzophenon, 2,2'-dihydroxy-4-methoxybenzophenone, and 2,2'-dihydroxy-4,4'-dimethoxybenzophenone. Specific examples of the salicylic acid phenyl ester-based ultraviolet absorber include p-tert-butylphenyl salicylate ester and p-octylphenyl salicylate ester. One of these ultraviolet absorbers may be used alone, or two or more of these ultraviolet absorbers may be mixed and used.

In the present invention, in the case of blending an ultraviolet absorber, the blending quantity is usually preferably 0.1 to 3 wt%, and more preferably 0.3 to 3 wt%, with respect to 100 wt% of the methacrylic resin composition.

The thickness of the film obtained from the methacrylic resin composition according to the present invention is preferably 10 to 300 $\mu$m, and more preferably 10 to 200 $\mu$m. If the thickness of the film is less than 10 $\mu$m, the workability of the film tends to be reduced. If the thickness of the film exceeds 300 $\mu$m, the transparency of the obtained film tends to be reduced.

The gloss of the surface of the film obtained from the methacrylic resin composition according to the present invention can be reduced by a known method as necessary. The gloss of the film surface can be reduced by, for example, a method of kneading an inorganic filler or cross-linking polymeric particles into the methacrylic resin composition. The gloss of the film surface can be reduced also by embossing the obtained film.

The film obtained from the methacrylic resin composition according to the present invention can be used in the form of being laminated onto a metal, plastic, or the like. Examples of a method of laminating the film include: lamination forming; wet lamination in which after an adhesive is applied to a metal plate, such as a steel plate, the film is placed

onto the metal plate and then dried such that the film and metal plate are adhered together; dry lamination; extrusion lamination; and hot melt lamination.

Examples of a method of laminating the film on a plastic member include: an insert molding or laminate injection press molding in which the film is placed in a mold in advance and then a resin is injected into the mold by injection molding; and in-mold forming in which the film is pre-formed and then placed in a mold, and thereafter a resin is injected into the mold by injection molding.

A film-laminated article obtained from the methacrylic resin composition according to the present invention is used by being laminated on, for example, interior or exterior materials of automobiles as an alternative to painting and on building materials such as window frames, bathroom fitments, wall papers, and floor materials, particularly on decorative sheets used on European bay windows. A film-laminated article obtained from the methacrylic resin composition according to the present invention can also be used for everyday sundries, furniture, the housing of electrical appliances, the housing of office automation equipment such as a facsimile, electrical or electronic device components, etc.

## Examples

Hereinafter, the present invention is described in more detail based on examples, but is not limited to these examples. In the description below, terms "part(s)" and "%" refer to "part(s) by weight" and "wt%" unless otherwise specified.

It should be noted that physical property measurement methods used in examples, reference example and comparative examples described below are as follows.

(Measurement of Polymerization Conversion Rate)

The acrylic acid ester-based rubbery polymer (A-a) latex and the acrylic graft copolymer (A) latex were dried in a hot-blast dryer at 120°C for one hour, and thereby the amount of solid components therein was obtained. A polymerization conversion rate was calculated by an equation below.

$$\text{Polymerization conversion rate} = (\text{solid component amount} / \text{charged monomer amount}) \times 100$$

(Measurement of Graft Ratio)

One gram of the obtained acrylic graft copolymer (A) was dissolved in 40 ml of methyl ethyl ketone, and then subjected to centrifugal separation by using a centrifugal separator (CP60E manufactured by Hitachi Plant Engineering & Construction Co., Ltd.) at a rotation speed of 3000 rpm for one hour to separate insoluble components and soluble components. The obtained insoluble components were regarded as the acrylic acid ester-based rubbery polymer (A-a) and graft component (A-b), and the graft ratio was calculated by an equation below.

$$\text{Graft ratio (\%)} = \{(\text{weight of components insoluble in methyl ethyl ketone} - \text{weight of acrylic acid ester-based rubbery polymer (A-a)}) / \text{weight of acrylic acid ester-based rubbery polymer (A-a)}\} \times 100$$

(Measurement of Reduced Viscosity)

One gram of the methacrylic resin composition was dissolved in 40 ml of methyl ethyl ketone, and then subjected to centrifugal separation by using a centrifugal separator (CP60E manufactured by Hitachi Plant Engineering & Construction Co., Ltd.) at a rotation speed of 3000 rpm for one hour to separate insoluble components and soluble components. Then, 150 mg of components soluble in methyl ethyl ketone, which had been obtained by the centrifugal separation, was dissolved in 50 ml of N,N-dimethylformamide, and the reduced viscosity of the resulting solution was measured in accordance with JIS K6721.

(Measurement of Mean Particle Diameter)

The obtained acrylic acid ester-based rubbery polymer (A-a) latex and acrylic graft copolymer (A) latex were each diluted to obtain a sample having a solid concentration of 0.02 %. The mean particle diameter of the resulting

sample was obtained based on light transmittance at a wavelength of 546 nm by using a spectrophotometer (Spectrophotometer U-2000 manufactured by Hitachi, LTD.).

(Evaluation of Transparency)

The transparency of the obtained film was measured by calculating the haze at a temperature of 23±2 °C and a humidity of 50±5 % in accordance with JIS K6714.

(Evaluation of Flex Cracking Resistance)

The obtained film was bent once by 180 degrees, and then a change in the bent portion was visually checked to make evaluation as below.

Good: No crack was visible.
Poor: A crack was visible.

(Evaluation of Flex Whitening Resistance)

The obtained film was bent once by 180 degrees, and then a change in the bent portion was visually checked to make evaluation as below.

Good: No whitening was visible in the bent portion.
Not so good: Slight whitening was visible in the bent portion.
Poor: Significant whitening was visible in the bent portion.

(Evaluation of Shrinkage Factor of Film)

The obtained film was cut out into a discoid shape having a diameter of 100 mm and heated for ten minutes at a temperature of 150°C. Then, the dimension of the heated film was measured to obtain a thermal shrinkage factor.

$$\text{Thermal shrinkage factor (\%)} = \text{(dimension before heating} - \text{dimension after heating)} / \text{dimension before heating} \times 100$$

(Evaluation of Hot Water Whitening Resistance)

The obtained film was immersed in ion-exchanged water at 80°C for four hours. Then, drops of water on the film surface were removed, and after leaving the film in a still-standing state for one hour in a temperature environment of 23±2 °C, the haze (haze value) was measured in accordance with JIS K7136. The haze value after hot water whitening was compared with the haze value before the immersion. The degree of hot water whitening was evaluated from the haze values.

Good: Not more than 500 % of the haze value before the immersion.
Poor: Not less than 500 % of the haze value before the immersion.

(Evaluation of Delamination Resistance)

The obtained film and a printed PVC sheet were subjected to press molding at a temperature of 140°C, and thereby a laminated article was prepared. The laminated article was left in a still-standing state under the conditions of a humidity of 98 RH% and a temperature of 70°C, and delamination of the film from the PVC sheet was evaluated over time.

Good: Delamination occurred in four days or more.
Not so good: Delamination occurred in two to three days.
Poor: Delamination occurred in one day.

(Appearance of Film)

The obtained film was visually observed by transmissive observation from a distance of 20 cm. When no flow mark of resin was observed and the number of defects called fish eyes was 500 or less per square meter, the appearance of the film was evaluated as Good.

Abbreviations in the description herein represent respective substances indicated below.

OSA: sodium dioctyl sulfosuccinate
BA: butyl acrylate
MMA: methyl methacrylate
CHP: cumene hydroperoxide
tDM: tertiary dodecyl mercaptan
AIMA: allyl methacrylate
RUVA: 2-(2'-hydroxy-5'-methacryloyloxyethylphenyl)-2-H-benzotriazole (RUVA-93 manufactured by Otsuka Chemical Co., Ltd.)

(Production Example 1) Acrylic Graft Copolymer (A)

Substances indicated below were charged into an 8L polymerizer equipped with a stirrer.

Deionized water: 200 parts
Sodium dioctyl sulfosuccinate: 0.25 parts
Sodium formaldehyde sulfoxylate: 0.15 parts
Ethylenediaminetetraacetic acid-2-sodium: 0.001 parts
Ferrous sulfate: 0.00025 parts

The polymerizer was sufficiently purged with nitrogen gas such that substantially no oxygen was present therein. Thereafter, the internal temperature of the polymerizer was set to 60°C, and the monomer mixture (A-a) shown in Table 1 was continuously added into the polymerizer at a rate of 10 parts/hour. After the addition was completed, polymerization was further continued for 0.5 hours. As a result, the acrylic acid ester-based rubbery polymer (A-a) latex was obtained. The polymerization conversion rate was 99.5 %.

Thereafter, 0.05 parts of sodium dioctyl sulfosuccinate was charged into the polymerizer, and then the monomer mixture (A-b) shown in Table 1 was continuously added into the polymerizer at a rate of 10 parts/hour. Then, polymerization was further continued for one hour. As a result, the acrylic graft copolymer (A) latex was obtained. The polymerization conversion rate was 98.5 %.

The obtained acrylic graft copolymer (A) latex was subjected to salting-out with calcium chloride, coagulated, washed with water, and dried to obtain a resin powder (1). Furthermore, a monoaxial extruder with a vent of 40 mm in diameter (HV-40-28, manufactured by TABATA Industrial Machinery Co., Ltd.) was used to melt-knead the powder with a cylinder temperature set to 250 °C, and thereby pellets were formed.

(Production Examples 2 to 9) Acrylic Graft Copolymer (A)

The same polymerization, coagulation, washing with water, and drying as in Production Example 1 were performed except that the monomer composition was changed as shown in Table 1, and thereby resin powders (2) to (12) were obtained. In addition, melt-kneading was performed on each of the powders to form pellets.

(Production Example 10) Methacrylic Polymer (B)

As the methacrylic polymer (B), an acrylic ester copolymer produced by suspension polymerization (Delpowder 80N manufactured by Asahi Kasei Chemicals) was prepared.

(Production Example 11) Methacrylic Polymer (B)

As the methacrylic polymer (B), an acrylic ester copolymer produced by suspension polymerization (Delpowder 60N manufactured by Asahi Kasei Chemicals) was prepared.

(Production Example 12) Methacrylic Polymer (B)

As the methacrylic polymer (B), an MMA-EA copolymer produced by suspension polymerization (SUMIPEX EX manufactured by Sumitomo Chemical Company, Limited.) was prepared.

(Examples 1 to 6, Reference Example 7 and Comparative Examples 1 to 5)

Pellets obtained in Production Examples were used in combination as shown in Table 2, and 2.5 parts of an ultraviolet absorber TINUVIN P (manufactured by Ciba Specialty Chemicals) and 0.4 parts of an antioxidant Irganox 1010 (manufactured by BASF) were added to the pellets, which were subjected to extrusion molding by using a 40 mm diameter extruder equipped with a T-die (NEX 040397 manufactured by Nakamura Sanki Kabushiki Kaisha) at a setting cylinder temperature of 160 to 235°C and a die temperature of 250 °C, and thereby a film having a thickness of 58 μm was obtained. The obtained film was used to evaluate the aforementioned various properties. The results are shown in Table 2.

[Table 1]

| Production Example | | 1 | 2 | 3 | 4 | 5 | 6 | 7 | 8 | 9 |
|---|---|---|---|---|---|---|---|---|---|---|
| OSA | Parts | 0.61 | 0.61 | 0.61 | 0.28 | 0.61 | 0.27 | 0.05 | 0.05 | 0.35 |
| Monomer mixture (A-a) | Parts by weight | 33.4 | 37.5 | 42.9 | 30 | 30 | 47.5 | 30 | 40 | 50 |
| | BA (%) | 90 | 90 | 90 | 90 | 90 | 100 | 90 | 100 | 90 |
| | MMA (%) | 10 | 10 | 10 | 10 | 10 | 0 | 10 | 0 | 10 |
| | AIMA (Parts) | 0.60 | 0.68 | 0.77 | 0.36 | 0.54 | 0.10 | 2.50 | 2.00 | 0.50 |
| | CHP (Parts) | 0.05 | 0.05 | 0.06 | 0.06 | 0.04 | 0.04 | 0.09 | 0.05 | 0.12 |
| | RUVA (Parts) | 0.33 | 0.38 | 0.39 | 0.00 | 0.30 | 0.00 | 0.00 | 0.06 | 10.00 |
| Monomer mixture (A-b) | Parts by weight | 66.6 | 62.5 | 57.1 | 70 | 70 | 52.5 | 70 | 60 | 50 |
| | BA (%) | 10 | 10 | 10 | 10 | 10 | 10 | 10 | 10 | 10 |
| | MMA (%) | 90 | 90 | 90 | 90 | 90 | 90 | 90 | 90 | 90 |
| | tDM | 0.33 | 0.31 | 0.29 | 0.20 | 0.35 | 0.03 | 0.30 | 0.30 | 0.37 |
| | CUP (Parts) | 0.20 | 0.19 | 0.17 | 0.30 | 0.21 | 0.03 | 0.30 | 0.25 | 0.28 |
| | RUVA (Parts) | 0.78 | 0.88 | 0.10 | 0.00 | 0.70 | 0.00 | 1.40 | 1.94 | 10.00 |
| Graft ratio | | 100 | 88 | 73 | 91 | 113 | 100 | 120 | 250 | 60 |
| Particle diameter of rubbery polymer (A-a) | | 80 | 80 | 80 | 80 | 80 | 80 | 230 | 80 | 80 |

[Table 2]

| | | Example 1 | Example 2 | Example 3 | Example 4 | Example 5 | Example 6 | Reference Example 7 | Comparative Example 1 | Comparative Example 2 | Comparative Example 3 | Comparative Example 4 | Comparative Example 5 |
|---|---|---|---|---|---|---|---|---|---|---|---|---|---|
| Resin Composition (parts) | Production example 1 | 90 | 90 | | | | | | | | | | |
| | Production example 2 | | | 80 | 80 | | | | | | | | |
| | Production example 3 | | | | | 70 | 70 | | | | | | |
| | Production example 4 | | | | | | | 100 | | | | | |
| | Production example 5 | | | | | | | | 100 | | | | |
| | Production example 6 | | | | | | | | | 40 | | | |
| | Production example 7 | | | | | | | | | | 70 | | |
| | Production example 8 | | | | | | | | | | | 50 | |
| | Production example 9 | | | | | | | | | | | | 50 |
| | Production example 10 | 10 | | 20 | | 30 | | | | | | | |
| | Production example 11 | | 10 | | 20 | | 30 | | | | | | |
| | Production example 12 | | | | | | | | | 60 | 30 | 50 | 50 |
| Particle diameter (nm) of rubbery polymer (A-a) | | 80 | 80 | 80 | 80 | 80 | 80 | 80 | 80 | 80 | 230 | 80 | 80 |
| Cross-linking agent content (%) in (A-a) | | 1.8 | 1.8 | 1.8 | 1.8 | 1.8 | 1.8 | 1.2 | 1.8 | 0.21 | 2.5 | 5 | 1 |
| Rubber content (%) | | 30 | 30 | 30 | 30 | 30 | 30 | 30 | 30 | 19 | 21 | 20 | 25 |
| Graft ratio (%) | | 100 | 100 | 88 | 88 | 73 | 73 | 91 | 113 | 100 | 120 | 250 | 60 |
| Reduced viscosity (dl/g) | | 0.84 | 0.82 | 0.89 | 0.83 | 0.89 | 0.8 | 0.89 | 0.71 | 0.78 | 0.3 | 0.21 | 0.35 |
| Haze (%) | | 0.7 | 0.73 | 0.86 | 0.81 | 0.92 | 0.77 | 0.81 | 0.77 | 1.8 | 2.4 | 0.5 | 0.6 |
| Hot water whitening resistance | | Good | Good | Good | Good | Good | Good | Good | Good | Poor | Good | Good | Good |
| Delamination resistance | | Good | Good | Good | Good | Good | Good | Good | Not so good | Not so good | Not so good | Poor | Poor |
| Flex cracking (whitening) resistance | Cracking | Good | Good | Good | Good | Good | Good | Good | Good | Good | Good | Not so good | Not so good |
| | Whitening | Good | Good | Good | Good | Good | Good | Good | Good | Not so good | Good | Good | Not so good |
| Thermal shrinkage factor (%) | | 23 | 24 | 22 | 21 | 20 | 20 | 19 | 27 | 23 | 14 | 25 | 15 |
| Film appearance | | Good | Good | Good | Good | Good | Good | Good | Good | Good | Good | Poor | Good |

## Claims

1. A methacrylic resin composition comprising an acrylic graft copolymer (A) containing an acrylic acid ester-based rubbery polymer (A-a), wherein:

   the acrylic graft copolymer (A) is obtained by polymerizing a monomer mixture (A-b), which contains a methacrylic acid ester as a major component, with the acrylic acid ester-based rubbery polymer (A-a);
   the acrylic acid ester-based rubbery polymer (A-a) is obtained by polymerizing a monomer mixture containing 60 to 100 wt% of an acrylic acid ester and 0 to 40 wt% of another copolymerizable vinyl-based monomer with a copolymerizable cross-linking agent;

   (1) a content of the acrylic acid ester-based rubbery polymer (A-a) is 10 to 40 wt%, with respect to 100 wt% of the methacrylic resin composition;
   (2) a mean particle diameter d of the acrylic acid ester-based rubbery polymer (A-a) is 50 to 200 nm;
   (3) a relationship between the mean particle diameter d (nm) of the acrylic acid ester-based rubbery polymer (A-a) and the cross-linking agent content w (wt%) in a monomer mixture used in the acrylic acid ester-based rubbery polymer (A-a) satisfies an inequation of $0.02d \leq w \leq 0.05d$;
   (4) a graft ratio of the acrylic graft copolymer (A) is 60 to 105 %; and
   (5) a reduced viscosity of components of the methacrylic resin composition, the components being soluble in methyl ethyl ketone, is 0.8 to 1.3 dl/g,
   wherein the graft ratio and the reduced viscosity are measured as described in the description.

2. The methacrylic resin composition according to claim 1, comprising a methacrylic polymer (B).

3. The methacrylic resin composition according to claim 1 or 2, comprising an ultraviolet absorber.

4. A film formed by molding the methacrylic resin composition according to any one of claims 1 to 3.

5. A laminated article comprising the film according to claim 4.

## Patentansprüche

1. Eine Methacrylharzzusammensetzung, umfassend ein Acryl-Pfropfcopolymer (A), das ein Kautschukpolymer (A-a) auf Acrylsäureester-Basis enthält, wobei:

   das Acryl-Pfropfcopolymer (A) erhalten wird durch Polymerisation eines Monomergemischs (A-b), das einen Methacrylsäureester als Hauptbestandteil enthält, mit dem Kautschukpolymer (A-a) auf Acrylsäureester-Basis;
   das Kautschukpolymer (A-a) auf Acrylsäureester-Basis erhalten wird durch Polymerisation eines Monomergemischs, das 60 bis 100 Gew.-% eines Acrylsäureesters und 0 bis 40 Gew.-% eines anderen copolymerisierbaren Monomers auf Vinylbasis enthält, mit einem copolymerisierbaren Vernetzungsmittel;

   (1) ein Gehalt des Kautschukpolymers (A-a) auf Acrylsäureesterbasis 10 bis 40 Gew.-%, bezogen auf 100 Gew.-% der Methacrylharzzusammensetzung, beträgt;
   (2) ein mittlerer Teilchendurchmesser d des Kautschukpolymers (A-a) auf Acrylsäureester-Basis 50 bis 200 nm beträgt;
   (3) ein Verhältnis zwischen dem mittleren Teilchendurchmesser d (nm) des Kautschukpolymers (A-a) auf Acrylsäureester-Basis und dem Vernetzungsmittelgehalt w (Gew.-%) in einem in dem Kautschukpolymer (A-a) auf Acrylsäureester-Basis verwendeten Monomergemisch eine Ungleichung von $0{,}02d \leq w \leq 0{,}05d$ erfüllt;
   (4) ein Pfropfverhältnis des Acryl-Pfropfcopolymers (A) 60 bis 105 % beträgt; und
   (5) eine reduzierte Viskosität von Bestandteilen der Methacrylharzzusammensetzung,
   wobei die Bestandteile in Methylethylketon löslich sind, 0,8 bis 1,3 dl/g beträgt, wobei das Pfropfverhältnis und die reduzierte Viskosität wie in der Beschreibung beschrieben gemessen werden.

2. Die Methacrylharzzusammensetzung nach Anspruch 1, umfassend ein Methacrylpolymer (B).

3. Die Methacrylharzzusammensetzung nach Anspruch 1 oder 2, umfassend einen Ultraviolett-Absorber.

4. Ein Film, gebildet durch Formgebung der Methacrylharzzusammensetzung nach einem der Ansprüche 1 bis 3.

5. Ein laminierter Gegenstand, umfassend den Film nach Anspruch 4.

## Revendications

1. Composition de résine méthacrylique comprenant un copolymère greffé d'acrylique (A) contenant un polymère caoutchouteux à base d'ester d'acide acrylique (A-a), dans laquelle :

   le copolymère greffé d'acrylique (A) est obtenu par polymérisation d'un mélange de monomères (A-b), qui contient un ester d'acide méthacrylique en tant que composant principal, avec le polymère caoutchouteux à base d'ester d'acide acrylique (A-a) ;
   le polymère caoutchouteux à base d'ester d'acide acrylique (A-a) est obtenu par polymérisation d'un mélange de monomères contenant 60 à 100 % en poids d'un ester d'acide acrylique et 0 à 40 % en poids d'un autre monomère à base de vinyle copolymérisable avec un agent de réticulation copolymérisable ;
   (1) une teneur en le polymère caoutchouteux à base d'ester d'acide acrylique (A-a) est de 10 à 40 % en poids pour 100 % en poids de la composition de résine méthacrylique;
   (2) une granulométrie moyenne d du polymère caoutchouteux à base d'ester d'acide acrylique (A-a) est de 50 à 200 nm ;
   (3) une relation entre la granulométrie moyenne d (nm) du polymère caoutchouteux à base d'ester d'acide acrylique (A-a) et la teneur en agent de réticulation w (% en poids) dans un mélange de monomères utilisé dans le polymère caoutchouteux à base d'ester d'acide acrylique (A-a) satisfait à l'inégalité $0{,}02d \leq w \leq 0{,}05d$ ;
   (4) un taux de greffage du copolymère greffé d'acrylique (A) est de 60 à 105 % ; et
   (5) une viscosité réduite de composants de la composition de résine méthacrylique, les composants étant solubles dans la méthyléthylcétone, est de 0,8 à 1,3 dl/g,
   dans laquelle le taux de greffage et la viscosité réduite sont mesurés comme décrit dans la description.

2. Composition de résine méthacrylique selon la revendication 1, comprenant un polymère méthacrylique (B).

3. Composition de résine méthacrylique selon la revendication 1 ou 2, comprenant un agent absorbant les ultraviolets.

4. Film formé par moulage de la composition de résine méthacrylique selon l'une quelconque des revendications 1 à 3.

5. Article stratifié comprenant le film selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005095478 A
- JP H09194542 A
- US 2009012215 A1
- EP 1555293 A1